# EUROPÄISCHE PATENTSCHRIFT

(11) **EP 3 878 756 B1**
(45) Veröffentlichungstag und Bekanntmachung des Hinweises auf die Patenterteilung: **07.06.2023**
(21) Anmeldenummer: 20162603.3
(22) Anmeldetag: 12.03.2020
(51) Int. Cl.: B64F 1/34, B64D 41/00

(54) **SYSTEM ZUR BODENSTROMVERSORGUNG**
SYSTEM FOR GROUND POWER SUPPLY
SYSTÈME D'ALIMENTATION ÉLECTRIQUE AU SOL

(43) Veröffentlichungstag der Anmeldung: 15.09.2021
(73) Patentinhaber: Piller Group GmbH, 37520 Osterode am Harz (DE)
(72) Erfinder: Klauenberg, Armin, 37520 Osterode (DE)
(74) Vertreter: REHBERG HÜPPE + PARTNER

(56) Entgegenhaltungen:
- EP-A1- 3 228 546
- WO-A2-2019/182643

## Beschreibung

### TECHNISCHES GEBIET DER ERFINDUNG

Die Erfindung bezieht sich auf ein System zur Bodenstromversorgung von Flugzeugen, das die Merkmale des Oberbegriffs des unabhängigen Patentanspruchs 1 aufweist.

Flugzeuge verfügen in aller Regel über eigene Generatoren zur Stromversorgung. Diese Generatoren können durch die Triebwerke der Flugzeuge angetrieben werden. Häufig sind zum Antreiben der Generatoren separate Brennkraftmaschinen vorgesehen. Die Stromversorgung von am Boden befindlichen Flugzeugen erfolgt vorzugsweise nicht über die eigenen Generatoren der Flugzeuge, um den Betrieb der Triebwerke bzw. der separaten Brennkraftmaschinen und die damit verbundenen Emissionen zu vermeiden. Stattdessen werden zur Bodenstromversorgung von Flugzeugen auf Flughäufen häufig spezielle Systeme eingesetzt, die sich durch geringere Emissionen sowohl in stofflicher als auch in akustischer Hinsicht auszeichnen.

### STAND DER TECHNIK

Bekannte Systeme zur Bodenstromversorgung von Flugzeugen weisen mobile Einheiten auf, die jeweils eine Brennkraftmaschine und einen von der Brennkraftmaschine angetriebenen Generator sowie bedarfsweise auch noch einen Spannungswandler zur Anpassung einer von dem Generator ausgegebenen Spannung an den Bedarf des jeweiligen Flugzeugs umfassen, wobei diese Bestandteile auf einem gemeinsamen Fahrwerk angeordnet sind. Diese Einheiten werden mit auf dem jeweiligen Flugplatz auch für andere Zwecke verwendeten Zugmaschinen in die Nähe der am Boden mit Strom zu versorgenden Flugzeuge gebracht und dann über Versorgungskabel an die zu versorgenden Flugzeuge angeschlossen. Auch ein Brennstofftank zur Versorgung der Brennkraftmaschine befindet sich in der Regel auf dem jeweiligen Fahrwerk. In moderner Ausführungsform verursachen diese bekannten Systeme zwar geringere Emissionen als die eigenen Stromversorgungen der Flugzeuge. Es besteht jedoch ein Interesse daran, auch diese Emissionen zu reduzieren oder ganz zu vermeiden.

Bei weiteren bekannten Systemen zur Bodenstromversorgung von Flugzeugen sind mobile Einheiten mit einer Batterie als Energiespeicher und einem Spannungswandler auf einem gemeinsamen Fahrwerk vorgesehen. Auch diese mobilen Einheiten werden mit Zugmaschinen in die Nähe der am Boden mit Strom zu versorgenden Flugzeuge gebracht und über Anschlusskabel an die Flugzeuge angeschlossen. Wenn die Batterie einer solchen mobilen Einheit erschöpft ist, wird die mobile Einheit gegen eine solche mit einer ausreichend geladenen Batterie ausgetauscht und an eine Ladestation verfahren. Das Wiederaufladen der Batterie nimmt einige Zeit in Anspruch. Diese Zeit ist deutlich länger als die Zeit, die benötigt wird, um einen Brennstofftank zur Versorgung einer Brennkraftmaschine wieder aufzufüllen. Daher müssen bei diesem bekannten System typischerweise doppelt so viele mobile Einheiten mit Energiespeichern in Form von Batterien vorgesehen werden, wie Flugzeuge am Boden mit Strom zu versorgen sind.

Zumindest als Konzept sind auch Systeme zur Bodenstromversorgung von Flugzeugen mit Hilfe von wasserstoffgespeisten Brennstoffzellen bekannt. Bei mobilen Einheiten mit Wasserstoff gespeisten Brennstoffzellen ist die Bereitstellung des Wasserstoffs nicht unproblematisch. So verbietet sich auf Flughäfen aus Sicherheitsgründen die Bereitstellung des Wasserstoffs in Drucktanks. Bekannte Metallhybridspeicher zur druckarmen Speicherung von Wasserstoff für mobile Einheiten mit wasserstoffgespeisten Brennstoffzellen sind mit den Nachteilen verbunden, dass Metallhybridspeicher eine vergleichsweise lange Befüllungszeit für das erneute Befüllen mit neuem Wasserstoff aufweisen.

Bei einem bekannten System zur Bodenstromversorgung von Flugzeugen mit einer mobilen Wandlereinheit, die ein Fahrwerk und einen auf dem Fahrwerk gelagerten Spannungswandler umfasst, sind auf demselben Fahrwerk zwei getrennte Batterien als Energiespeicher angeordnet, die wechselweise, insbesondere nacheinander an einen Eingang eines Spannungswandlers anschließbar sind. Im Betrieb dieses bekannten Systems für Bodenstromversorgung führt von der mobilen Wandlereinheit ein Versorgungskabel von einem Ausgang des Spannungswandlers zu dem jeweiligen Flugzeug.

Aus der WO 2019 / 182 643 A2 ist eine batteriebetriebene Vorrichtung zur Bodenstromversorgung von Flugzeugen bekannt, die die Merkmale des Oberbegriffs des unabhängigen Patentanspruchs 1 aufweist. Auf einem gemeinsamen Fahrwerk sind ein Spannungswandler und mehrere wieder aufladbare Batterien angeordnet, die zur Versorgung des Spannungswandlers mit elektrischer Energie wechselweise an einen Eingang des Spannungswandlers anschließbar sind. Zur Bodenstromversorgung eines der Flugzeuge ist ein Versorgungskabel an einen Ausgang des Spannungswandlers anschließbar. Mehrere solche Vorrichtungen können parallel zueinander an das Versorgungskabel angeschlossen und dem Versorgungskabel über ausgangsseitige Schalter der Vorrichtungen wechselweise zugeschaltet werden.

Aus der EP 3 228 546 A1 ist eine Vorrichtung zur Bodenstromversorgung von Flugzeugen bekannt, bei der auf einem Fahrwerk eine wieder aufladbare Batterie, ein eingangsseitig an die Batterie sowie ausgangsseitig über ein Versorgungskabel an eines der Flugzeuge anschließbarer Wechselrichter, eine Brennstoffzellenanlage, die über einen Wandler an die wieder aufladbare Batterie angeschlossen ist, und eine Steuerung für den Wandler angeordnet sind.

### AUFGABE DER ERFINDUNG

Der Erfindung liegt die Aufgabe zugrunde, ein System zur Bodenstromversorgung von Flugzeugen aufzuzeigen, das im Einsatz zumindest im Wesentlichen emissionsfrei ist und das dennoch zu günstigeren Kosten als bekannte emissionsarme Systeme zur Bodenstromversorgung von Flugzeugen realisierbar ist.

### LÖSUNG

Die Aufgabe der Erfindung wird durch ein System zur Bodenstromversorgung von Flugzeugen mit den Merkmalen des unabhängigen Patentanspruchs 1 gelöst. Die abhängigen Patentansprüche betreffen bevorzugte Ausführungsformen dieses Systems.

### BESCHREIBUNG DER ERFINDUNG

Bei einem erfindungsgemäßen System zur Bodenstromversorgung von Flugzeugen mit mindestens einer mobilen Wandlereinheit, die ein erstes Fahrwerk und einen auf dem ersten Fahrwerk gelagerten Spannungswandler umfasst, und mit mindestens zwei Energiespeichern, die zur Versorgung des Spannungswandlers mit elektrischer Energie wechselweise an einen Eingang des Spannungswandlers anschließbar sind, wobei ein Versorgungskabel zur Bodenstromversorgung eines der Flugzeuge an einen Ausgang des Spannungswandlers anschließbar ist, ist jeder der mindestens zwei Energiespeicher Teil einer von mindestens zwei mobilen Speichereinheiten, die jeweils ein zweites Fahrwerk umfassen.

Damit dass jede Speichereinheit ein zweites Fahrwerk umfasst ist dabei nicht gemeint, dass die Speichereinheit zwei Fahrwerke aufweist, sondern, dass jede Speichereinheit ein zweites Fahrwerk umfasst, während die mindestens eine Wandlereinheit ein erstes Fahrwerk aufweist.

Bei dem erfindungsgemäßen System sind also die Funktionen der Spannungswandlung und der Energiespeicherung auf unterschiedliche Einheiten, das sind die Wandlereinheit und die Speichereinheiten aufgeteilt, die über separate Fahrwerke verfügen und entsprechend separat verfahrbar sind. Der Spannungswandler der Wandlereinheit kann so aus Energiespeichern verschiedener Speichereinheiten mit elektrischer Energie versorgt werden. Insbesondere kann eine der mindestens zwei mobilen Speichereinheiten von der Wandlereinheit entfernt und durch die andere der mindestens zwei mobilen Speichereinheiten ersetzt werden, wenn sich ihr Energiespeicher erschöpft hat. Der erschöpfte Energiespeicher der einen Speichereinheit kann dann mit dem zweiten Fahrwerk dieser Speichereinheit an einen von der Wandlereinheit entfernten Ort verfahren und dort wieder aufgeladen werden, während die Wandlereinheit aus dem noch nicht erschöpften Energiespeicher der anderen Speichereinheit versorgt wird. Wenn dieser Energiespeicher erschöpft ist, kann ein neuerlicher Austausch der Speichereinheiten erfolgen, weil dies typischerweise erst dann der Fall ist, wenn der Energiespeicher der einen Speichereinheit wieder aufgeladen ist, auch wenn dies gewisse Zeit in Anspruch nimmt. Bei sehr langen Zeiten zum Wiederauflagen des Energiespeichers können statt der mindestens zwei auch drei oder mehr Speichereinheiten vorgesehen werden, so dass dann die Energiespeicher von jeweils zwei oder mehr dieser Speichereinheiten gleichzeitig wieder aufgeladen werden können, während eine weitere der Speichereinheiten mit ihrem Energiespeicher die Versorgung des Spannungswandlers der Wandlereinheit mit elektrischer Energie sicherstellt.

Die zur Realisation des erfindungsgemäßen Systems notwendigen Investitionen beschränken sich auf das technisch praktisch Notwendige, nämlich auf eine Wandlereinheit je gleichzeitig zu versorgendem Flugzeug und so viele Speichereinheiten wie für eine permanente Versorgung des Spannungswandlers der Wandlereinheiten mit elektrischer Energie im Wechsel erforderlich sind. Insbesondere werden im Betrieb des erfindungsgemäßen Systems keine Spannungswandler mit den Speichereinheiten zum Aufladen der Energiespeicher der Speichereinheiten verfahren, die während des Aufladens der Energiespeicher nicht benötigt werden. Jeder der mobilen Einheiten des erfindungsgemäßen Systems ist ganz auf ihre jeweilige Aufgabe des Energiespeicherns bzw. Spannungswandelns fokussiert und daher von begrenzter Gesamtkomplexität. Praktisch können daher eine Wandlereinheit und eine Energiespeichereinheit des erfindungsgemäßen Systems oftmals sogar kostengünstiger bereitgestellt werden als eine bekannte mobile Einheit mit Spannungswandler und Energiespeicher. Besonders hohe Einsparungen ergeben sich durch das erfindungsgemäße System wenn statt zweier bekannter mobiler Einheiten mit Spannungswandler und Energiespeicher bei dem erfindungsgemäßen System nur eine Wandlereinheit und zwei Energiespeichereinheiten zum Einsatz kommen.

Typischerweise sind die Energiespeicher bei dem erfindungsgemäßen System jeweils über einen von der entsprechenden Speichereinheit zu der Wandlereinheit führendes erstes Anschlusskabel an den Eingang des Spannungswandlers anschließbar. Ein solches Anschlusskabel stellt eine gewisse Flexibilität für die Relativpositionierung der Speichereinheit gegenüber der Wandlereinheit bereit.

Es versteht sich, dass bei dem erfindungsgemäßen System regelmäßig mindestens eine Ladeeinheit vorhanden ist, an die die Energiespeicher wechselweise anschließbar sind. Diese Ladeeinheit ist in aller Regel anders als die mindestens eine Wandlereinheit und die mindestens zwei Speichereinheiten stationär angeordnet.

Die Energiespeicher der mindestens zwei Speichereinheiten können jeweils entweder eine elektrische Batterie oder eine Brennstoffzelle und einen Brennstofftank umfassen. Anders gesagt kann der jeweilige Energiespeicher entweder eine elektrische Batterie oder eine sogenannte Brennstoffzellenbatterie sein. In beiden Fällen ist der Energiespeicher insgesamt ein elektrochemischer Energiespeicher.

Unabhängig von der Ausbildung der Energiespeicher der Speichereinheiten als elektrische Batterien oder als Brennstoffzellenbatterien kann die Wandlereinheit dieselbe sein, d. h. sowohl zur Verwendung mit Speichereinheiten mit elektrischen Batterien als auch zur Verwendung mit Speichereinheiten mit Wasserstoffbatterien geeignet sein.

Der Brennstofftank der Brennstoffzellenbatterie ist vorzugsweise ein Metallhydridspeicher, um Wasserstoff als Brennstoff für den emissionsarmen Betrieb der Brennstoffzelle möglichst druckarm speichern zu können. Die langen Auffüllzeiten eines Metallhydridspeichers sind bei dem erfindungsgemäßen System zur Bodenstromversorgung von Flugzeugen wegen der größeren Anzahl der Speichereinheiten gegenüber der Anzahl der Wandlereinheiten unproblematisch.

Wenn die Energiespeicher der mindestens zwei Speichereinheiten jeweils eine elektrische Batterie aufweisen, können die Energiespeicher jeweils über das erste Anschlusskabel, mit dem die Energiespeicher auch an den Spannungswandler anschließbar sind oder über ein zweites Anschlusskabel an die Ladeeinheit anschließbar sein, wobei das jeweilige Anschlusskabel von der Speichereinheit zu der Ladeeinheit führt. Weiterhin kann in diesem Fall die mindestens eine Ladeeinheit zum eingangsseitigen Anschließen an ein lokales oder öffentliches Stromnetz ausgebildet sein.

Wenn hingegen die Energiespeicher der mindestens zwei Speichereinheiten jeweils eine Brennstoffzelle und einen Brennstofftank aufweisen, ist es bevorzugt, wenn die Ladeeinheit nicht nur zum Wiederauffüllen des Brennstofftanks vorgesehen ist, sondern auch zum Regenerieren der Brennstoffzelle. Brennstoffzellen können häufig durch Beaufschlagen mit einer bestimmten Abfolge von Spannungen bezüglich ihres Wirkungsgrads regeneriert werden. Entsprechend ist die Ladeeinheit vorzugsweise zum Anlegen einer solchen Spannungsabfolge an die jeweilige Brennstoffzelle ausgebildet. Es versteht sich, dass die Speichereinheiten des erfindungsgemäßen Systems zur Bodenstromversorgung von Flugzeugen regelmäßig nicht nur eine einzige, sondern mehrere Brennstoffzellen, typischerweise einen sogenannten Brennstoffzellenstapel aufweisen, damit sie ausreichend elektrische Leistung bereitstellen können.

Unabhängig davon, ob die Speichereinheiten elektrische Batterien oder Brennstoffzellenbatterien umfassen, können die mindestens zwei mobilen Speichereinheiten des erfindungsgemäßen Systems jeweils frei von Spannungswandlern sein, insbesondere frei von Spannungswandlern für von den Energiespeichern ausgegebenen elektrischen Strom und im Falle einer elektrischen Batterie als Energiespeicher auch für in die Batterie zum Laden derselben gespeisten elektrischen Strom.

Für den Einsatz auf einem Verkehrsflughafen geeignete Speichereinheiten des erfindungsgemäßen Systems zur Bodenstromversorgung von Flugzeugen weisen Speicherkapazitäten im Bereich von 20 kWh bis 300 kWh auf. Spezieller sind Speichereinheiten mit Speicherkapazitäten von 80 kWh bis 100 kWh ohne ständigen Wechsel nutzbar, dennoch vergleichsweise rasch wieder aufladbar und zu vertretbaren Kosten bereitstellbar.

Die mindestens eine Wandlereinheit des erfindungsgemäßen Systems kann völlig frei von Energiequellen für die Bodenstromversorgung eines der Flugzeuge sein. Dies schließt jedoch nicht aus, dass die Wandlereinheit einen Pufferspeicher am Eingang des Spannungswandlers aufweist, beispielsweise einen Gleichspannungszwischenkreis mit hoher elektrischer Kapazität, um einen Austausch einer Speichereinheit mit erschöpften Energiespeicher gegen eine Speichereinheit mit frischem Energiespeicher zu überbrücken. Einen elektrochemischen Energiespeicher für die Bodenstromversorgung eines der Flugzeuge weist die Wandlereinheit jedoch in aller Regel nicht auf. Allerdings wird die Wandlereinheit ebenso regelmäßig über einen elektrochemischen Energiespeicher zur Versorgung einer Steuerung der Wandlereinheit und dergleichen aufweisen.

Um einen völlig problemlosen Wechsel zwischen verschiedenen Speichereinheiten während der Bodenstromversorgung eines Flugzeugs mit der Wandlereinheit zu ermöglichen, kann die mindestens eine Wandlereinheit des erfindungsgemäßen Systems eine Wechselschaltung aufweisen, die zwei Anschlüsse für jeweils eine der mindestens zwei Speichereinheiten wechselweise mit dem Eingang des Spannungswandlers der mindestens einen Wandlereinheit verbindet. Dabei bleibt die Verbindung des jeweiligen Flugzeugs über das Versorgungskabel mit der Wandlereinheit bestehen, die zu jeder Zeit über jeweils ein erstes Anschlusskabel mit einer der Speichereinheiten und zwischenzeitlich auch mit beiden der mindestens zwei Speichereinheiten verbunden ist.

Da Verkehrsflugzeuge typischerweise ein Bordnetz mit einer Wechselspannung von 400 Hz aufweisen, weist der Spannungswandler der mindestens einen Wandlereinheit typischerweise einen Wechselrichter auf, der für die Bodenstromversorgung eines der Flugzeuge eine Versorgungswechselspannung von typischerweise 400 Hz ausgibt.

Die absolute Anzahl der Wandlereinheiten und der Speichereinheiten eines erfindungsgemäßen Systems wird typischerweise deutlich größer als 1 bzw. 2 sein. Das heißt, die mindestens eine mobile Wandlereinheit ist regelmäßig eine von mehreren gleichen mobilen Wandlereinheiten des Systems, und die mindestens zwei mobilen Speichereinheiten sind regelmäßig zwei von vielen gleichen mobilen Speichereinheiten des Systems, wobei je Wandlereinheit der mehreren gleichen mobilen Wandlereinheiten regelmäßig zwei der Speichereinheiten der vielen gleichen mobilen Speichereinheiten vorhanden sind. Genauso kann die mindestens eine Ladeeinheit eine von mehreren gleichen Ladeeinheiten des Systems sein, wobei je Wandlereinheit der mehreren gleichen mobilen Wandlereinheiten eine der Ladeeinheiten der mehreren gleichen Ladeeinheiten vorhanden sein kann.

Hinsichtlich ihrer ersten und zweiten Fahrwerke können die Wandlereinheiten und die Speichereinheiten einem lokalen Standard für Fahrwerke von in der Umgebung der Flugzeuge am Boden verfahrbare Einheiten entsprechen. In jedem Fall können die ersten und zweiten Fahrwerke der Wandlereinheiten und der Speichereinheiten grundsätzlich gleich sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Brennstoffzelle die Rede ist, ist dies so zu verstehen, dass genau ein Brennstoffzelle, zwei Brennstoffzellen oder mehr Brennstoffzellen vorhanden sind. Die in den Patentansprüchen aufgeführten Merkmale können durch weitere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Seitenansicht einer ersten Ausführungsform eines erfindungsgemäßen Systems zur Bodenstromversorgung von Flugzeugen.
- **Fig. 2**: ist eine Draufsicht von oben auf eine zweite Ausführungsform des erfindungsgemäßen Systems zur Bodenstromversorgung von Flugzeugen.
- **Fig. 3**: illustriert ein Detail einer Wandlereinheit und einer Speichereinheit einer weiteren Ausführungsform des erfindungsgemäßen Systems zur Bodenstromversorgung von Flugzeugen.
- **Fig. 4**: illustriert Details einer anderen Speichereinheit des erfindungsgemäßen Systems zur Bodenstromversorgung von Flugzeugen; und
- **Fig. 5**: illustriert Details einer Wechselschaltung einer erfindungsgemäßen Wandlereinheit einer weiteren Ausführungsform des erfindungsgemäßen Systems zur Bodenstromversorgung von Flugzeugen.

### FIGURENBESCHREIBUNG

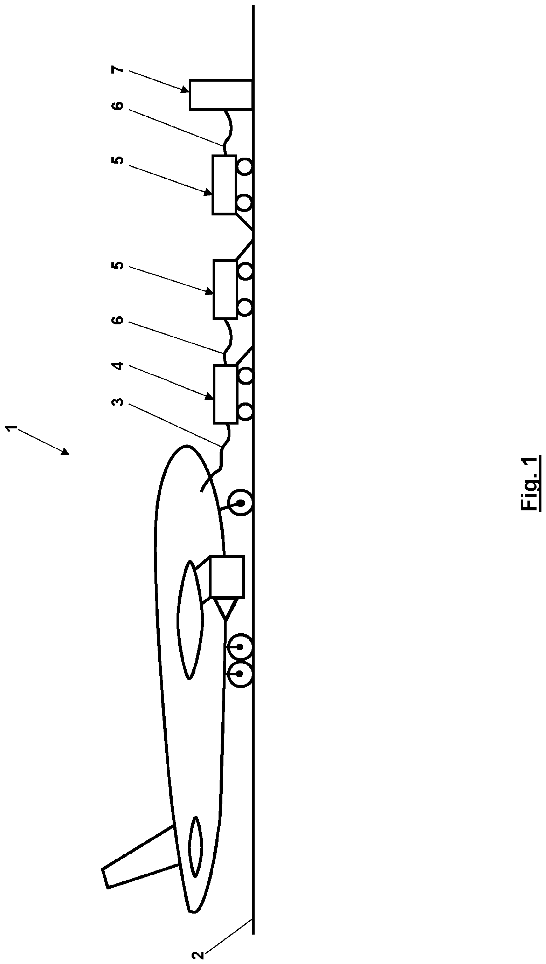

**Fig. 1** zeigt ein Flugzeug 1 am Boden 2, das dort über ein Versorgungskabel 3 mit Strom versorgt wird. Das Versorgungskabel 3 führt von einer mobilen Wandlereinheit 4 zu dem Flugzeug 1. An die mobile Wandlereinheit 4 ist eine mobile Speichereinheit 5 über ein Anschlusskabel 6 angeschlossen. Die mobile Speichereinheit 5 versorgt die Wandlereinheit 4 mit elektrischer Energie und weist dazu einen Energiespeicher auf. Eine weitere gleiche mobile Speichereinheit 5 ist über ihr Anschlusskabel 6 an eine stationäre Ladeeinheit 7 angeschlossen, um ihren Energiespeicher aufzuladen. Wenn der Energiespeicher der an die Wandlereinheit 4 angeschlossenen Speichereinheit 5 erschöpft ist und der Energiespeicher der an die Ladeeinheit 7 angeschlossenen Speichereinheit 5 aufgeladen ist, können die Speichereinheiten 5 getauscht werden, wobei vorübergehend beide Speichereinheiten 5 an die Wandlereinheit 4 angeschlossen sein können. Die Wandlereinheit 4 ist so zur fortlaufenden Bodenstromversorgung von Flugzeugen 1 geeignet.

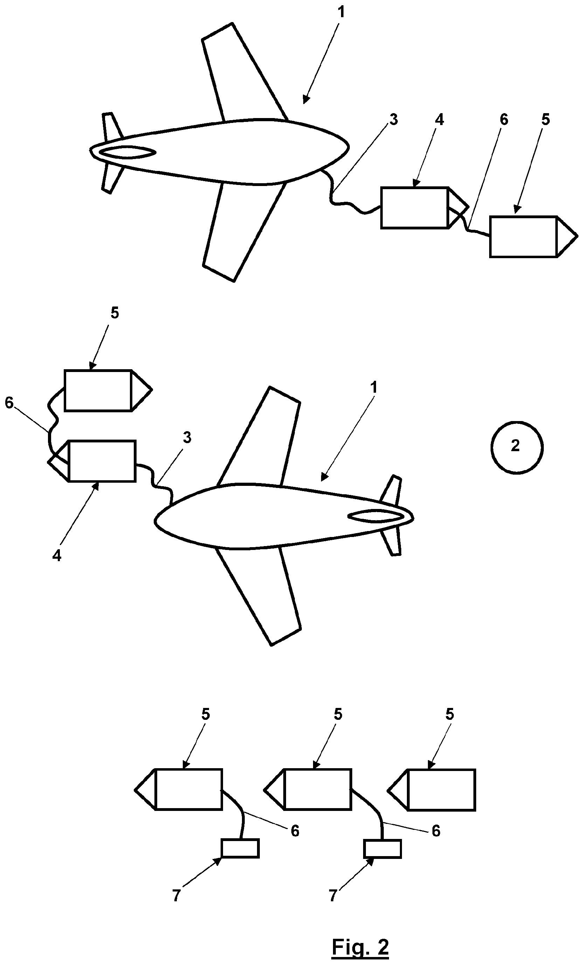

**Fig. 2** zeigt ein System zur Bodenstromversorgung von Flugzeugen 1 mit hier insgesamt zwei Wandlereinheiten 4 und fünf Speichereinheiten 5 sowie zwei Ladeeinheiten 7. Dabei ist eine Speichereinheit 5 als Reserve vorhanden, falls der Energiespeicher einer der an die Wandlereinheiten 4 angeschlossenen Speichereinheiten 5 erschöpft ist, bevor der Energiespeicher der damit im Wechsel genutzten und an eine der Ladestationen 7 angeschlossenen Speichereinheit 5 wieder aufgeladen ist. Bei mehr als zwei gleichzeitig am Boden 2 mit Strom zu versorgenden Flugzeugen 1, wie sie in Fig. 2 dargestellt sind, sind entsprechend mehr Wandlereinheiten 4, Speichereinheiten 5 und Ladeeinheiten 7 vorzusehen.

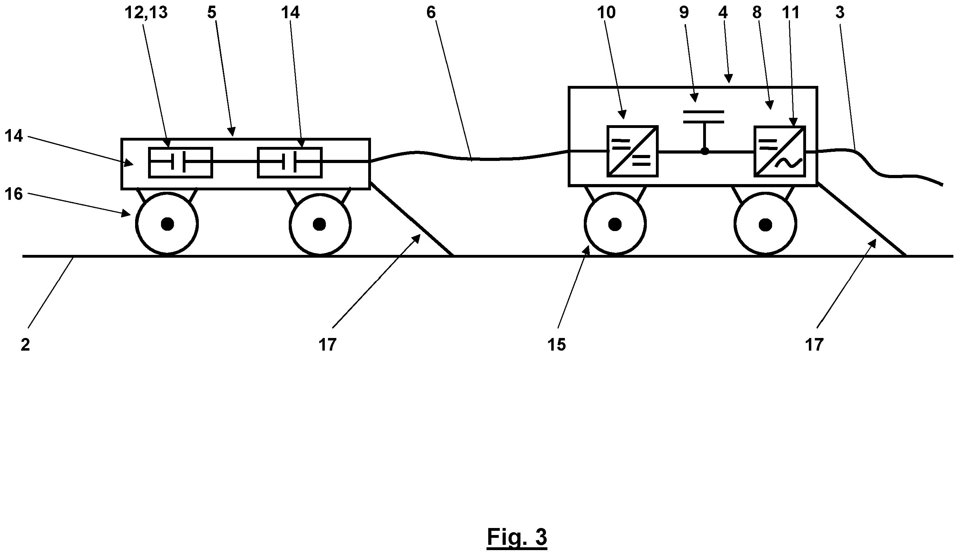

**Fig. 3** illustriert schematisch den inneren Aufbau einer Wandlereinheit 4 und einer daran angeschlossenen Speichereinheit 5. Die Wandlereinheit 4 weist einen Spannungswandler 8 auf. Der Spannungswandler 8 umfasst hier einen grundsätzlich optionalen eingangsseitigen Hochsetzsteller 10, einen an den Ausgang des Hochsetzstellers 10 angeschlossenen Gleichspannungszwischenkreis 9 und einen mit seinem Eingang an den Gleichspannungszwischenkreis 9 angeschlossenen Wechselrichter 11. Der Wechselrichter 11 ist beispielsweise dazu ausgebildet, Wechselstrom einer Frequenz von 400 Hz über das Versorgungskabel 3 abzugeben. Der Energiespeicher 12 der Speichereinheit 5 ist hier eine elektrische Batterie 13 mit mehreren zusammengeschalteten Batteriezellen 14. Beide Einheiten 4 und 5 verfügen über gleiche Fahrwerke 15 und 16 und sind jeweils über eine Zugdeichsel 17 an eine hier nicht dargestellte Zugmaschine anhängbar und mit dieser am Boden 2 verfahrbar.

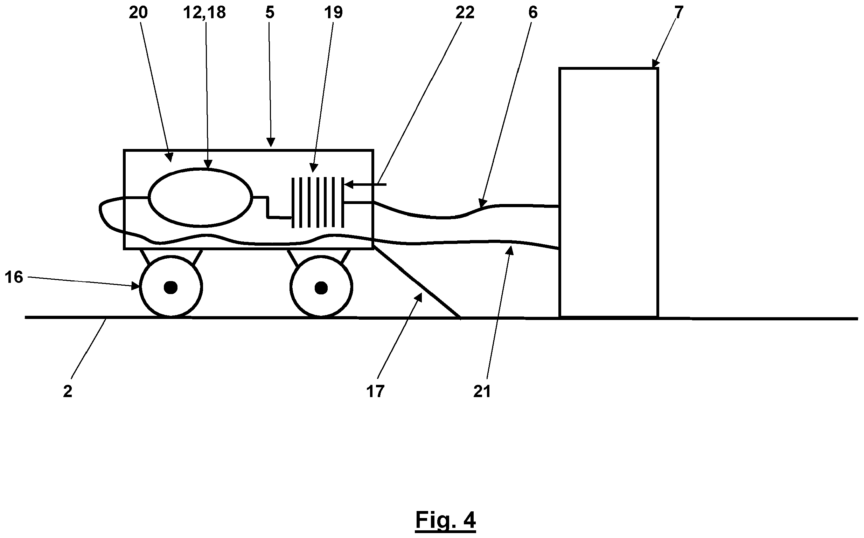

**Fig. 4** illustriert schematisch eine alternative Ausbildung des Energiespeichers 12 einer Speichereinheit 5 als Brennstoffzellenbatterie 18 mit einer als Brennstoffzellenstapel angedeuteten Brennstoffzelle 19 und einem Brennstofftank 20, der insbesondere ein Metallhydridspeicher für Wasserstoff ist. An die in Fig. 4 dargestellte Ladeeinheit 7 ist nicht nur der Brennstofftank 20 über eine Brennstoffleitung 21 angeschlossen, sondern auch die Brennstoffzelle 19 über das Anschlusskabel 6. Dies dient dazu, während des Auffüllens des Brennstofftanks 20 die Brennstoffzelle 19 durch Beaufschlagung mit bestimmten Spannungen zu regenerieren. Die Brennstoffzelle 19 ist zudem als Luft 22 aus der Umgebung atmende Brennstoffzelle angedeutet.

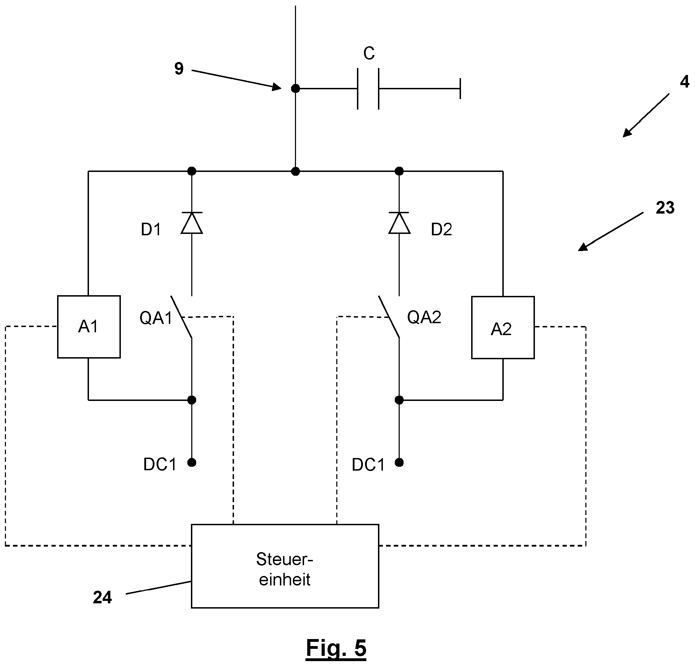

**Fig. 5** illustriert eine eingangsseitige Wechselschaltung 23, die dem eingangsseitigen Gleichspannungszwischenkreis 9 der Wandlereinheit 4 vorgeschaltet ist. Die Wechselschaltung kann dabei alternativ oder zusätzlich zu dem Hochsetzsteller gemäß Fig. 3 vorhanden sein und ist gegebenenfalls insbesondere auf der Eingangsseite des Hochsetzstellers vorgesehen. Die Wechselschaltung 23 weist zwei Anschlüsse DC1 und DC2 für zwei Gleichspannungen bereitstellende Speichereinheiten 5 auf. Die Anschlüsse DC1 und DC2 werden von einer Steuereinheit 24 dem Gleichspannungszwischenkreis 9 über Leistungsschalter QA1 und QA2 wechselweise zugeschaltet, wobei die Anschlüsse DC1 und DC2 zusätzlich durch Dioden D1 und D2 entkoppelt sind. Zudem ist für jeden der Anschlüsse DC1 und DC2 eine Vorladeschaltung A1 bzw. A2, die eine Spannungsmessung umfasst, vorgesehen, um bei Bedarf den Gleichspannungszwischenkreis 9 vor dem Schließen des jeweiligen Schalters QA1 bzw. QA2 zur Vermeidung von Überströmen voraufzuladen. Die Schalter QA1 und QA2 können Leistungsschalter, -schütze oder -relais sein. Mit Hilfe der Steuereinheit 24 kann für das Laden des Gleichspannungszwischenkreises 9 zwischen zwei an die Anschlüsse DC1 und DC2 angeschlossenen Speichereinheiten 5 umgeschaltet werden, ohne dass die Energieversorgung des an den Gleichspannungszwischenkreis angeschlossenen Spannungswandlers 9 und damit die Bodenstromversorgung des daran angeschlossenen Flugzeugs 1 unterbrochen wird. Dabei kann der Umschaltzeitpunkt zwischen den Speichereinheiten 5 manuell vorgegeben werden, oder nach einem Steuerprogramm, das genau dann umschaltet, wenn der Energiespeicher 12 der bisher genutzten Speichereinheit 5 erschöpft ist, d. h. bis zu einem definierten Grad entladen ist.

### BEZUGSZEICHENLISTE

- 1: Flugzeug
- 2: Boden
- 3: Versorgungskabel
- 4: Wandlereinheit
- 5: Speichereinheit
- 6: Anschlusskabel
- 7: Ladeeinheit
- 8: Spannungswandler
- 9: Gleichspannungszwischenkreis
- 10: Hochsetzsteller
- 11: Wechselrichter
- 12: Energiespeicher
- 13: elektrische Batterie
- 14: Batteriezelle
- 15: (erstes) Fahrwerk
- 16: (zweites) Fahrwerk
- 17: Zugdeichsel
- 18: Brennstoffzellenbatterie
- 19: Brennstoffzelle
- 20: Brennstofftank
- 21: Brennstoffleitung
- 22: Luft
- 23: Wechselschaltung
- 24: Steuereinheit
- DC1: Anschluss
- DC2: Anschluss
- D1: Diode
- D2: Diode
- QA1: Leistungsschalter
- QA2: Leistungsschalter
- A1: Vorladeschaltung
- A2: Vorladeschaltung
- C: Kapazität des Gleichspannungszwischenkreises 9

## Patentansprüche

1. System zur Bodenstromversorgung von Flugzeugen (1)
- mit mindestens einer mobilen Wandlereinheit (4), die ein erstes Fahrwerk (15) und einen auf dem ersten Fahrwerk (15) gelagerten Spannungswandler (8) umfasst, und
- mit mindestens zwei Energiespeichern (12), die zur Versorgung des Spannungswandlers (8) mit elektrischer Energie wechselweise an einen Eingang des Spannungswandlers (8) anschließbar sind,
wobei ein Versorgungskabel (3) zur Bodenstromversorgung eines der Flugzeuge (1) an einen Ausgang des Spannungswandlers (8) anschließbar ist,
**dadurch gekennzeichnet, dass** jeder der mindestens zwei Energiespeicher (12) Teil einer von mindestens zwei mobilen Speichereinheiten (5) ist, die jeweils ein zweites Fahrwerk (16) umfassen.

2. System nach Anspruch 1, **dadurch gekennzeichnet, dass** die Energiespeicher (12) jeweils über ein von der entsprechenden Speichereinheit (5) zu der Wandlereinheit (4) führendes erstes Anschlusskabel (6) an den Eingang des Spannungswandlers (8) anschließbar sind.

3. System nach Anspruch 1 oder 2, **dadurch gekennzeichnet,**
- **dass** mindestens eine Ladeeinheit (7) vorhanden ist, an die die Energiespeicher (12) wechselweise anschließbar sind,
- wobei die mindestens eine Ladeeinheit (7) optional stationär angeordnet ist.

4. System nach einem der vorhergehenden Ansprüche, **dadurch gekennzeichnet, dass** die Energiespeicher (12) der mindestens zwei Speichereinheiten (5) jeweils
- eine elektrische Batterie (13) oder
- eine Brennstoffzelle (19) und einen Brennstofftank (20), wobei der Brennstofftank (20) optional einen Metallhydridspeicher umfasst,
aufweisen.

5. System nach Anspruch 3, soweit rückbezogen auf Anspruch 2, wobei die Energiespeicher (12) der mindestens zwei Speichereinheiten (5) jeweils eine elektrische Batterie (13) aufweisen, **dadurch gekennzeichnet, dass** die Energiespeicher (12) jeweils über das erste oder ein zweites Anschlusskabel (6) an die Ladeeinheit (7) anschließbar sind, wobei das jeweilige Anschlusskabel (6) von der Speichereinheit (5) zu der Ladeeinheit (7) führt.

6. System nach einem der Ansprüche 3 und 5, **dadurch gekennzeichnet, dass** die mindestens eine Ladeeinheit (7) zum eingangsseitigen Anschließen an ein Stromnetz ausgebildet ist.

7. System nach Anspruch 3, wobei die Energiespeicher (12) der mindestens zwei Speichereinheiten (5) jeweils eine Brennstoffzelle (19) und einen Brennstofftank (20) aufweisen, **dadurch gekennzeichnet, dass** die Ladeeinheit (7) zum Regenerieren der Brennstoffzelle (19) ausgebildet ist.

8. System nach einem der vorhergehenden Ansprüche, **dadurch gekennzeichnet, dass** die mindestens zwei mobilen Speichereinheiten (5) jeweils frei von Spannungswandlern (8) sind.

9. System nach einem der vorhergehenden Ansprüche, **dadurch gekennzeichnet, dass** die mindestens zwei mobilen Speichereinheiten (5) jeweils eine Speicherkapazität im Bereich von 20 kWh bis 300 kWh oder von 80 kWh bis 100 kWh aufweisen.

10. System nach einem der vorhergehenden Ansprüche, **dadurch gekennzeichnet, dass** die mindestens eine Wandlereinheit (4) frei von Energiequellen für die Bodenstromversorgung eines der Flugzeuge (1) ist.

11. System nach einem der vorhergehenden Ansprüche, **dadurch gekennzeichnet, dass** die mindestens eine Wandlereinheit (4) eine Wechselschaltung aufweist, die zwei Anschlüsse für jeweils eine der mindestens zwei Speichereinheiten (5) wechselweise mit dem Eingang des Spannungswandlers (8) der mindestens einen Wandlereinheit (4) verbindet.

12. System nach einem der vorhergehenden Ansprüche, **dadurch gekennzeichnet, dass** der Spannungswandler (8) der mindestens einen Wandlereinheit (4) einen Wechselrichter (11) aufweist, der für die Bodenstromversorgung eines der Flugzeuge (1) eine Versorgungswechselspannung ausgibt.

13. System nach einem der vorhergehenden Ansprüche, **dadurch gekennzeichnet,**
- **dass** die mindestens eine mobile Wandlereinheit (4) eine von mehreren gleichen mobilen Wandlereinheiten (4) des Systems ist,
- **dass** die mindestens zwei mobilen Speichereinheiten (5) zwei von vielen gleichen mobilen Speichereinheiten (5) des Systems sind,
- wobei je Wandlereinheit (4) der mehreren gleichen mobilen Wandlereinheiten (4) mindestens zwei der Speichereinheiten (5) der vielen gleichen mobilen Speichereinheiten (5) vorhanden sind.

14. System nach Anspruch 13, soweit direkt oder indirekt rückbezogen auf Anspruch 3, **dadurch gekennzeichnet, dass** die mindestens eine Ladeeinheit (7) eine von mehreren gleichen Ladeeinheiten (7) des Systems ist.

15. System nach einem der vorhergehenden Ansprüche, **dadurch gekennzeichnet,**
- **dass** die ersten und zweiten Fahrwerke (15, 16) einem lokalen Standard für Fahrwerke (15, 16) von in der Umgebung der Flugzeuge (1) am Boden verfahrbaren Einheiten entsprechen und/oder
- **dass** die ersten und zweiten Fahrwerke (15, 16) gleich sind.

## Claims

1. System for ground power supply of aircraft (1), the system comprising
- at least one mobile transformer unit (4) having a first vehicle chassis (15) and a voltage transformer (8) mounted on the first vehicle chassis (15), and
- at least two energy stores (12) which can alternately be connected to an input of the voltage transformer (8) in order to supply the voltage transformer (8) with electric energy,
wherein a supply cable (3) for ground power supply of one of the aircraft (1) is connectable to an output of the voltage transformer (8),
**characterised in that** each of the at least two energy stores (12) is part of one of at least two mobile storage units (5) which each include a second vehicle chassis (16).

2. System of claim 1, **characterised in that** the energy stores (12) are each connectable to the input of the voltage transformer (8) via a first connection cable (6) leading from the respective storage unit (5) to the transformer unit (4).

3. System of claim 1 or 2, **characterised in**
- **that** at least one charging unit (7) is provided to which the energy stores (12) can be connected alternately,
- wherein, optionally, the at least one charging unit (7) is stationary.

4. System of any of the preceding claims, **characterised in that** the energy stores (12) of the at least two storage units (5) each comprise
- an electric battery (13) or
- a fuel cell (19) and a fuel reservoir (20), wherein, optionally, the fuel reservoir (20) includes a metal hydride store.

5. System of claim 3, in so far as depended on claim 2, wherein the energy stores (12) of the at least two storage units (5) each comprise an electric battery (13), **characterised in that** the energy stores (12) are each connectable via the first or a second connection cable (6) to the charging unit (7), wherein the respective connection cable (6) leads from the storage unit (5) to the charging unit (7).

6. System of any of the claims 3 and 5, **characterised in that** the at least one charging unit (7) is configured for being connected to a power grid at its input site.

7. System of claim 3, wherein the energy stores (12) of the at least two storage units (5) each comprise a fuel cell (12) and a fuel container (20), **characterised in that** the charging unit (7) is configured for regenerating the fuel cell (19).

8. System of any of the preceding claims, **characterised in that** the at least two mobile storage units (5) are devoid of voltage transformers (8).

9. System of any of the preceding claims, **characterised in that** the at least two mobile storage units (5) each have a storage capacity in a range from 20 kWh to 300 kWh or from 80 kWh to 100 kWh.

10. System of any of the preceding claims, **characterised in that** the at least one transformer unit (4) is devoid of energy sources for the ground power supply of one of the aircraft (1).

11. System of any of the preceding claims, **characterised in that** the at least one transformer unit (4) includes an alternating switch which connects two connectors for each of the at least two storage units (5) alternately with the input of the voltage transformer (8) of the at least one transformer unit (4).

12. System of any of the preceding claims, **characterised in that** the voltage transformer (8) of the at least one transformer unit (4) comprises an inverter (11) which outputs a supply AC voltage for the ground power supply of one of the aircraft (1).

13. System of any of the preceding claims, **characterised in**
- **that** the at least one mobile transformer unit (4) is one of a plurality of equal mobile transformer units (4) of the system,
- **that** the at least two mobile storage units (5) are two of many equal mobile storage units (5) of the system,
wherein per transformer unit (4) of the plurality of equal mobile transformer units (4) at least two of the storage units (5) of the many equal mobile storage units (5) are present.

14. System of claim 13, so far as directly or indirectly depended on claim 3, **characterised in that** the at least one charging unit (7) is one of several equal charging units (7) of the system.

15. System of any of the preceding claims, **characterised in**
- **that** the first and second vehicle chassis (15, 16) correspond to a local standard of vehicle chassis (15, 16) of units movable in the surroundings of the aircraft (1) on the ground and/or
- **that** the first and second vehicle chassis (15, 16) are equal.

## Revendications

1. Système pour l'alimentation électrique au sol d'avions (1)
- avec au moins une unité de convertisseur mobile (4) qui comprend un premier train de roulement (15) et un convertisseur de tension (8) logé sur le premier train de roulement (15) et
- avec au moins deux accumulateurs d'énergie (12) qui peuvent être raccordés à une entrée du convertisseur de tension (8) pour l'alimentation du convertisseur de tension (8) en énergie électrique,
dans lequel un câble d'alimentation (3) peut être raccordé à une sortie du convertisseur de tension (8) pour l'alimentation électrique au sol d'un des avions (1),
**caractérisé en ce que** chacun des deux accumulateurs d'énergie (12) fait partie d'une d'au moins deux unités d'accumulateurs mobiles (5) qui comprennent chacune un deuxième train de roulement (16).

2. Système selon la revendication 1, **caractérisé en ce que** les accumulateurs d'énergie (12) peuvent être raccordés chacun, par l'intermédiaire d'un premier câble de raccordement (6) conduisant de l'unité d'accumulateur (5) correspondante à l'unité de convertisseur (4), à l'entrée du convertisseur de tension (8).

3. Système selon la revendication 1 ou 2, **caractérisé en ce que**
- au moins une unité de charge (7) est présente, à laquelle les accumulateurs d'énergie (12) peuvent être raccordés alternativement,
- dans lequel l'au moins une unité de charge (7) est disposée, en option, de manière stationnaire.

4. Système selon l'une des revendications précédentes, **caractérisé en ce que** les accumulateurs d'énergie (12) des au moins deux unités d'accumulateurs (5) comprennent chacun
- une batterie électrique (13) ou
- une pile à combustible (19) et un réservoir de carburant (20), dans lequel le réservoir de carburant (20) comprend, en option, un réservoir hydrure métallique.

5. Système selon la revendication 3, en référence à la revendication 2, dans lequel les accumulateurs d'énergie (12) des au moins deux unités d'accumulateurs (5) comprennent chacun une batterie électrique (13), **caractérisé en ce que** les accumulateurs d'énergie (12) peuvent être raccordés chacun, par l'intermédiaire du premier ou d'un deuxième câble de raccordement (6), à l'unité de charge (7), dans lequel le câble de raccordement (6) correspondant conduit de l'unité d'accumulateur (5) à l'unité de charge (7).

6. Système selon l'une des revendications 3 et 5, **caractérisé en ce que** l'au moins une unité de charge (7) est conçue pour le raccordement côté entrée à un réseau électrique.

7. Système selon la revendication 3, dans lequel les accumulateurs d'énergie (12) des au moins deux unités d'accumulateurs (5) comprennent chacun une pile à combustible (19) et un réservoir de carburant (20), **caractérisé en ce que** l'unité de charge (7) est conçue pour la régénération de la pile à combustible (19).

8. Système selon l'une des revendications précédentes, **caractérisé en ce que** les au moins deux unités d'accumulateurs mobiles (5) sont chacune exemptes de convertisseurs de tension (8).

9. Système selon l'une des revendications précédentes, **caractérisé en ce que** les au moins deux unités d'accumulateurs mobiles (5) présentent chacune une capacité d'accumulation de l'ordre de 20 kWh à 300 kWh ou de 80 kWh à 100 kWh.

10. Système selon l'une des revendications précédentes, **caractérisé en ce que** l'au moins une unité de convertisseur (4) est exempte de sources d'énergie pour l'alimentation électrique au sol d'un des avions (1).

11. Système selon l'une des revendications précédentes, **caractérisé en ce que** l'au moins une unité de convertisseur (4) comprend un circuit alternatif qui relie deux raccordements pour chacun une des au moins deux unités d'accumulateurs (5) alternativement avec l'entrée du convertisseur de tension (8) de l'au moins une unité de convertisseur (4).

12. Système selon l'une des revendications précédentes, **caractérisé en ce que** le convertisseur de tension (8) de l'au moins une unité de convertisseur (4) comprend un onduleur (11) qui génère une tension alternative d'alimentation pour l'alimentation électrique au sol d'un des avions (1).

13. Système selon l'une des revendications précédentes, **caractérisé en ce que**
- l'au moins une unité de convertisseur mobile (4) est une parmi plusieurs unités de convertisseurs mobiles (4) du système,
- les au moins deux unités d'accumulateurs mobiles (5) sont deux parmi de nombreuses unités d'accumulateurs mobiles (5) identiques du système,
- dans lequel, pour chaque unité de convertisseur (4) des plusieurs unités de convertisseurs mobiles (4) identiques, au moins deux des unités d'accumulateurs (5) des nombreuses unités d'accumulateurs mobiles (5) sont présentes.

14. Système selon la revendication 13, en référence directement ou indirectement à la revendication 3, **caractérisé en ce que** l'au moins une unité de charge (7) est une parmi plusieurs unités de charge (7) identiques du système.

15. Système selon l'une des revendications précédentes, **caractérisé en ce que**
- les premier et deuxième trains de roulement (15, 16) correspondent à un standard local pour les trains de roulement (15, 16) d'unités mobiles dans l'environnement des avions (1) au sol et/ou
- les premier et deuxième trans de roulement (15, 16) sont identiques.
